(19) Europäisches Patentamt
European Patent Office
Office européen des brevets

(11) EP 1 671 543 A1

(12) **EUROPEAN PATENT APPLICATION**
published in accordance with Art. 158(3) EPC

(43) Date of publication:
**21.06.2006 Bulletin 2006/25**

(21) Application number: **04773467.8**

(22) Date of filing: **22.09.2004**

(51) Int Cl.:
***A01N 63/00*** *(1985.01)*

(86) International application number:
**PCT/JP2004/014290**

(87) International publication number:
**WO 2005/032258 (14.04.2005 Gazette 2005/15)**

(84) Designated Contracting States:
**AT BE BG CH CY CZ DE DK EE ES FI FR GB GR HU IE IT LI LU MC NL PL PT RO SE SI SK TR**

(30) Priority: **06.10.2003 RU 2003129759**

(71) Applicant: **Showa Denko K.K.**
**Tokyo 105-8518 (JP)**

(72) Inventors:
- **TYUTEREV, Stanislaw, Leonidovich**
  **Pavlovsk St. Petersburg, 196620 (RU)**
- **EVSTIGNEEVA, Tatiana, Alekseevna**
  **St. Petersburg, 198153 (RU)**

(74) Representative: **Strehl Schübel-Hopf & Partner**
**Maximilianstrasse 54**
**80538 München (DE)**

(54) **COMPOSITION FOR LOWERING NITRATE CONTENT IN DOMESTICATED PLANT**

(57) A composition for reducing the content of nitrate in a cultivation plant, **characterized in that** the composition comprises chitosan, an organic acid, a nitrate reductase activator, and a chlorophyll synthesis promoter, in the following mass ratio (%):

| | |
|---|---|
| chitosan | 15 to 25 |
| organic acid | 15 to 25 |
| nitrate reductase activator | 25 to 30 |
| chlorophyll synthesis promoter | 29 to 35. |

Fig.1

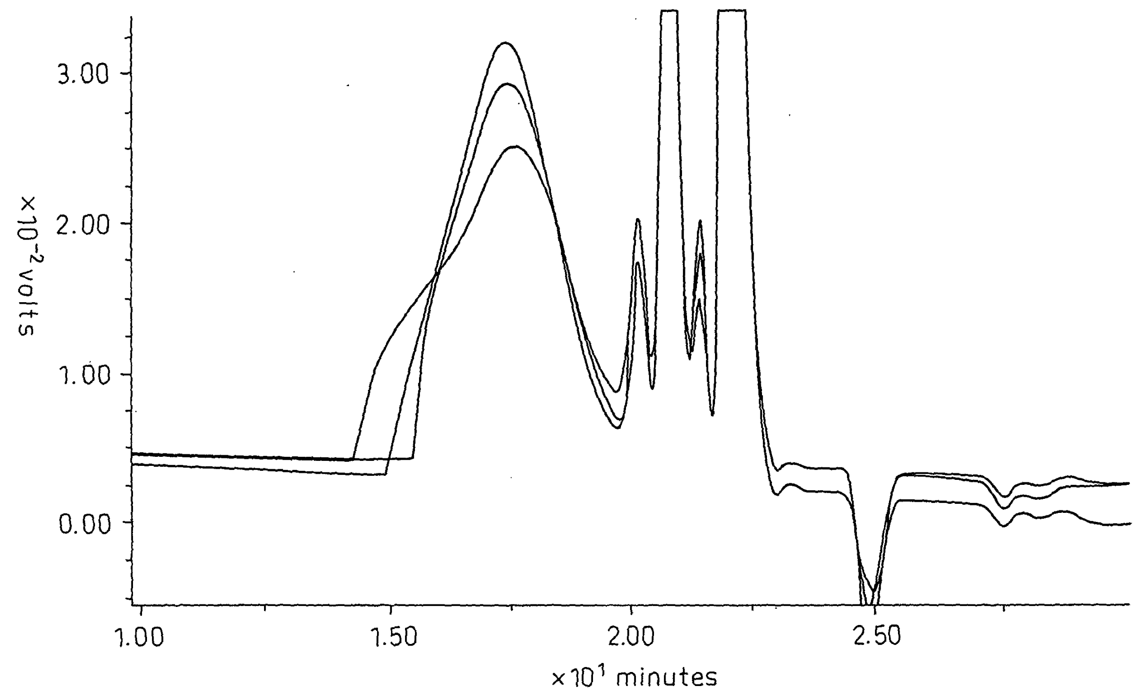


EP 1 671 543 A1

## Description

### Technical Field

The present invention relates to a technique which, in the field of agriculture, especially in the field of production of cultivation plants, improves the quality of agricultural products by lowering the content of nitrate in vegetables, animal foods, and other agricultural products, using a bioactive substance which is not substantially harmful to environment.

### Background Art

As well known in the art, the nitrate contained in foods has a fear of adversely affecting human health resulting in many metabolic defects such as a lowering in blood hemoglobin content. This nitrate nitrogen is considered to be a substance which induces the formation of mutagenesis and cancerogenic nitrosoamine in vivo.

Therefore, in cultivation plant products, especially vegetables which are applied for human consumption in an unheated state, and cultivation plants for fodder for livestock which have a fear of causing mixing of nitrates in cow milk and other livestock products, means and methods for reducing the nitrate content have been desired.

On the other hand, the nitrate is the most important nitrogen source for a large majority of agricultural cultivation plants. Further, the nitrate promotes the growth of plants and functions as a nutrient and a signal. The nitrate as the nutrient is reduced to an ammonium salt, is then converted to an amino acid component which is then converted to a component of protein, chlorophyll, hormone, and other nitrogen-containing compounds of plants. On the other hand, the nitrate as the signal enhances the expression of a large groups of genes to regulate metabolism of nitrogen and carbon.

The nitrate is reduced to an ammonium salt through two stages. In the first stage, the reaction is promoted by nitrate reductase, and the nitrate is reduced to nitrite. In the second-stage reaction, the nitrite is reduced with nitrite reductase to an ammonium salt. Incorporation of the ammonium salt in an amino acid is mainly catalyzed by glutamic acid synthetase and glutamate synthetase.

A composition based on an aqueous solution of 5-aminolevulinic acid and its salt is known as a composition for reducing the content of nitrate nitrogen in plants (Yoshida et al., 1996, U.S. Patent No. 5,489,572).

This composition is disadvantageous in that 5-aminolevulinic acid which is expensive (50,000 to 75,000 dollars per kg) should be used in a large amount (80 g to 3 kg per ha). This increases the cost of the composition per se, and, thus, the composition is cost ineffective. This composition has another drawback. Specifically, 5-aminolevulinic acid is herbicide which, under certain conditions, has a fear of inhibiting the growth and development of a cultivation plant to which the herbicide has been applied even in a small amount. The above patent describes that 5-aminolevulinic acid is used for treatment of soil and/or plants. In any case, when 5-aminolevulinic acid is used in a low concentration (not in a concentration for use as a herbicide), 5-aminolevulinic acid acts on target plants, as well as on weeds, for growth promotion.

The present inventor has adopted, as a prototype, a chitosan-based composition which has been proposed for enhancing resistance of plants to diseases (Novodzilov et al., 2000, Russian Patent No. 2158510).

This patent document describes that the chitosan-based composition does not substantially affect the content of nitrate nitrogen in cultivation plant products.

(Patent document 1) Russian Patent No. 2158510

(Patent document 2) U.S. Patent No. 5,489,572

### Disclosure of Invention

An object of the present invention is to provide a chemical which can overcome the drawbacks of the above

prior art.

More specifically, the object of the present invention is to develop a chemical which can reduce the content of nitrate in cultivation plants without necessarily requiring any transgenic plant and expensive compound.

Another object of the present invention is to provide a method for reducing the content of nitrate in cultivation plants by the chemical.

As a result of extensive and intensive studies, the present inventor has found that the use of a chitosan-containing composition as a chemical for reducing nitrate content is very effective in solving the above problems of the prior art, which has led to the completion of the present invention. More specifically, the chitosan-containing composition, when used in combination with an organic acid, a nitrate reductase activator, and a chlorophyll synthesis promoter, can effectively lower the content of nitrate in cultivation plants.

The present invention includes, for example:

[1] A composition for reducing the content of nitrate in a cultivation plant, characterized in that said composition comprises chitosan, an organic acid, a nitrate reductase activator, and a chlorophyll synthesis promoter, in the following mass ratio (%):

| | |
|---|---|
| chitosan | 15 to 25 |
| nitrate reductase activator | 25 to 30 |
| chlorophyll synthesis promoter | 29 to 35 |
| organic acid | 15 to 25; |

[2] The composition for reducing the content of nitrate according to the above item [1], characterized in that the mass average molecular weight of chitosan is in the range of 20 to 180 kDa;
[3] The composition for reducing the content of nitrate according to the above item [1] or [2], characterized in that the degree of deacetylation of chitosan is not less than 70%;
[4] The composition for reducing the content of nitrate according to any one of the above items [1] to [3], characterized in that said organic acid is at least one member selected from the group consisting of succinic acid, ascorbic acid and sorbic acid;
[5] The composition for reducing the content of nitrate according to any one of the above items [1] to [4], characterized in that said organic acid is a combination of succinic acid, ascorbic acid and sorbic acid;
[6] The composition for reducing the content of nitrate according to the above item [5], characterized in that said organic acid is a combination of succinic acid, ascorbic acid and sorbic acid and the mass ratio of the succinic acid, the ascorbic acid and the sorbic acid to the whole organic acid contained in the composition is 2 for the succinic acid, 0.8 to 1.2 for the ascorbic acid, and 0.8 to 1.2 for the sorbic acid;
[7] The composition for reducing the content of nitrate according to any one of the above items [1] to [6], characterized in that the nitrate reductase activator is at least one member selected from the group consisting of iron nitrate, ammonium molybdate, indoleacetic acid, naphthylacetic acid, ethylenediaminetetraacetic acid, and N,N-dicarboxymethylglutamic acid;
[8] The composition for reducing the content of nitrate according to any one of the above items [1] to [7], characterized in that the nitrate reductase activator is a combination of iron nitrate, ammonium molybdate, indoleacetic acid, and ethylenediaminetetraacetic acid;
[9] The composition for reducing the content of nitrate according to the above item [8], characterized in that the nitrate reductase activator is a combination of iron nitrate, ammonium molybdate, indoleacetic acid, and ethylenediaminetetraacetic acid and the mass ratio of the iron nitrate, the ammonium molybdate, the indoleacetic acid, and the ethylenediaminetetraacetic acid to the whole nitrate reductase activator contained in the composition is 20 for the iron nitrate, 4 to 6 for the ammonium molybdate, 0.5 to 1.5 for the indoleacetic acid, and 0.5 to 1.5 for the ethylenediaminetetraacetic acid;
[10] The composition for reducing the content of nitrate according to any one of the above items [1] to [7], characterized in that the nitrate reductase activator is a combination of iron nitrate, ammonium molybdate, naphthylacetic acid, and N,N-dicarboxymethylglutaminic acid;
[11] The composition for reducing the content of nitrate according to the above item [10], characterized in that the nitrate reductase activator is a combination of iron nitrate, ammonium molybdate, naphthylacetic acid, and N,N-dicarboxymethylglutaminic acid and the mass ratio of the iron nitrate, the ammonium molybdate, the naphthylacetic acid, and the N,N-dicarboxymethylglutaminic acid to the whole nitrate reductase activator contained in the composition is 20 for the iron nitrate, 4 to 6 for the ammonium molybdate, 0.5. to 1.5 for the naphthylacetic acid, and 0.5 to 1.5 for the N,N-dicarboxymethylglutaminic acid;
[12] The composition for reducing the content of nitrate according to any one of the above items [1] to [11], characterized in that the chlorophyll synthesis promoter is at least one member selected from the group consisting of 2-oxoglutaric acid and L-glutamic acid;
[13] The composition for reducing the content of nitrate according to any one of the above items [1] to [12], characterized in that the chlorophyll synthesis promoter is a combination of 2-oxoglutaric acid and L-glutamic acid;
[14] The composition for reducing the content of nitrate according to the above item [13], characterized in that the chlorophyll synthesis promoter is a combination of 2-oxoglutaric acid and L-glutamic acid and the mass ratio of the 2-oxoglutaric acid and the L-glutamic acid to the whole chlorophyll synthesis promoter contained in the composition is 30 for the 2-oxoglutaric acid and 0.5 to 1.5 for L-glutamic acid;
[15] The composition for reducing the content of nitrate according to any one of the above items [1] to [14], characterized by further comprising 1 to 3 parts by mass, based on 100 parts by mass of the composition for reducing the content of nitrate, of a surfactant.
[16] The composition for reducing the content of nitrate according to the above item [15], characterized in that said

surfactant is polyoxyethylene sorbitan monostearate;
[17] An aqueous solution of a composition for reducing the content of nitrate, characterized in that said aqueous solution comprises said composition for reducing the content of nitrate according to any one of the above items [1] to [16] dissolved in water;
[18] The aqueous solution of a composition for reducing the content of nitrate according to the above item [17], characterized by having a pH value in the range of 4.5 to 5.5;
[19] A method for reducing the content of nitrate in a cultivation plant, said method comprising applying the composition for reducing the content of nitrate according to any one of the above items [1] to [16] onto seeds of the cultivation plant;
[20] A method for reducing the content of nitrate in a cultivation plant, said method comprising applying the aqueous solution of a composition for reducing the content of nitrate according to the above item [17] or [18] onto seeds of the cultivation plant;
[21] A method for reducing the content of nitrate in a cultivation plant, said method comprising applying the composition for reducing the content of nitrate according to any one of the above items [1] to [16] onto leaves of the cultivation plant;
[22] A method for reducing the content of nitrate in a cultivation plant, said method comprising applying the aqueous solution of the composition for reducing the content of nitrate according to any one of the above item [17] or [18] onto leaves of the cultivation plant;
[23] The method for reducing the content of nitrate in a cultivation plant according to any one of the above items [19] to [22], characterized in that said cultivation plant is at least one member selected from the group consisting of spinach, lettuces, cabbages, dill, parsley, radishes, onions, beets, carrots, and potatoes.

Brief Description of Drawings

Fig. 1 is a GPC chromatogram of a composition for nitrate reduction using chitosan having a known molecular weight as measured by a "viscosity measurement method."

Best Mode for Carrying Out the Invention

The present invention will be described in more detail.
The chitosan used in the present invention is not particularly limited and may be in any form and have any property so far as it is a substance generally called "chitosan."
Specifically, the chitosan is defined as a product produced, for example, by hydrolytically deacetylating an acetoamide group in chitin as a naturally occurring polysaccharide represented by formula (1), also known as β-poly-N-acetyl-D-glucosamine, to an amino group, and an example of chitosan is β-poly-D-glucosamine represented by formula (2):

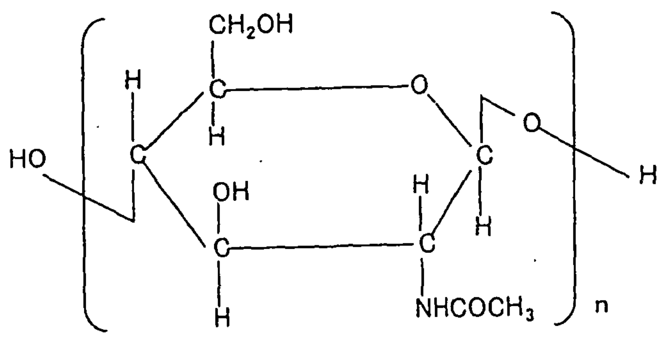

(1)

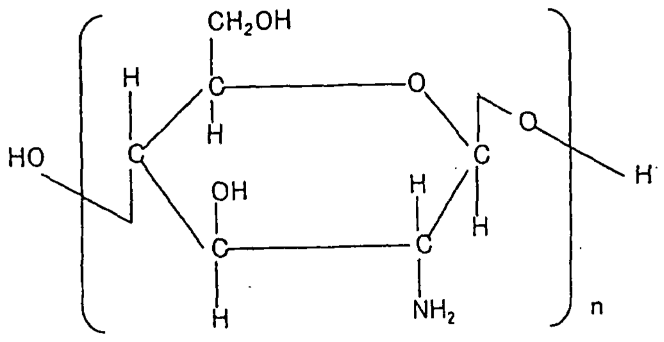

(2)

Regarding details of chitin and chitosan, if necessary, see, for example, "- Saigo No Baiomasu (Ultimate Biomass) - Kichin, Kitosan (Chitin and Chitosan)" published by GIHODO SHUPPAN Co., Ltd. on June 20, 1995 (the 5th impression of the 1st edition), particularly pp. 1 - 20.

In producing chitosan by deacetylating chitin, it is not indispensable that the acetoamide group is entirely hydrolyzed to an amino group. That is, a part of the acetoamide group may remain unchanged so far as the presence of the acetoamide group is not deterimental to the use of the chitosan of the present invention. The chitosan may of course be such that the acetoamide group is not detected or is substantially absent. In the present invention, both chitosan free from any acetoamide group and chitosan in which a part of the acetoamide group remains unchanged are defined as the "chitosan."

The proportion of the amino group and the acetoamide group present in the chitosan molecule is generally called "degree of deacetylation" and is defined by the following equation. The method for measuring the degree of deacetylation will be described later.

Degree of deacetylation = (number of amino groups/(number of acetoamide groups + number of amino groups)) x 100 (%)

The composition according to the present invention does not depend upon the degree of deacetylation. In general, however, the use of chitosan having a degree of deacrylation of not less than 70% is preferred.

When the degree of deacetylation is excessively low, the solubility of chitosan in water is lowered. Therefore, in this case, the use of the chitosan is difficulat, and the potency is likely to be lowered. On the other hand, when the degree of deacetylation is excessively high, potency cannot be stably provided without difficulties.

The degree of deacetylation is more preferably in the range of 75 to 95%, most preferably in the range of 75 to 90%.

It is said that depolymerization occurs in a part of the polymer in the course of deacetylation of chitin. The molecular weight of the produced chitosan ranges from low molecular weight to high molecular weight.

The molecular weight of chitosan discussed in the present invention refers to mass average molecular weight, and the method for measuring the mass average molecular weight will be described later.

The present invention proposes the use of chitosan having a molecular weight of 20 to 180 kDa in terms of the above-defined molecular weight in the regulation of the composition. This molecular weight corresponds to a degree of polymerization from 120 to 1020. If possible, the use of chitosan having a molecular weight of 20 to 120 kDa is preferred. The composition containing chitosan having the above molecular weight is preferred, because it is easily dissolved in water and rapidly penetrates into plants.

The molecular weight of chitosan is more preferably in the range of 20 to 100 kDa, most preferably in the range of 20 to 70 kDa.

The source of chitosan usable in the present invention is not particularly limited. Specifically, not only chitosan produced by deacetylating naturally occurring chitin chemically or biochemically, but also chitosan extracted from cell walls of fungi may be used.

Further, chitosans commercially available from Dainichiseika Color & Chemicals Manufacturing Co., Ltd. (tradename: DAICHITOSAN), Yaizu Suisankagaku Industry Co., Ltd. and the like may also be used.

The content of chitosan in the composition for reducing the nitrate content is in the range of 15 to 25% by mass. The chitosan content is preferably in the range of 15 to 20% by mass, more preferably in the range of 18 to 20% by mass. In the present specification, the content (mass ratio) of individual components including chitosan are based on the total mass of the composition for reducing the nitrate content containing the component per se. Specifically, the total mass of the composition for reducing the nitrate content is (A + B) grams, and the mass ratio of chitosan is {A/(A + B)} x 100 (%), wherein A represents the mass of chitosan, g, and B represents the total mass of the components other than

chitosan, g.

The composition for reducing the nitrate content according to the present invention is characterized by comprising, in addition to chitosan, an organic acid, a nitrate reductase activator and a chlorophyll synthesis promoter. Individual components will be described.

(Nitrate reductase activator)

The nitrate reductase activator usable in the present invention is not particularly limited so far as it is usable in agricultural or plant cultivation applications. The "nitrate reductase activator" used herein refers to a substance that functions to enhance the activity of nitrate reductase in plants. The mechanism of action is not particularly limited so far as it leads to the development of action which enhances the activity of nitrate reductase (regarding the detail of the nitrate reductase activator, if necessary, reference may be made to description in literature "Yasairui No Shousankangenkouso No Seikagaku (Biochemistry of Nitrate Reductase of Vegetables)" Hiroki Nakagawa, Food Science and Technology Research, Vol. 45, No. 1, published on January 1998, or "Anzen Jizokugata Nogyo Wo Mezashite ~ Kitosan No Nogyoriyo No Riron To Jissai (For Safe and Extended Agriculture - Theory and Practice of Chitosan for Use in Agriculture)" published by GIHODO SHUPPAN Co., Ltd. on November 6, 2000 (the 1st impression of the 1st edition), particularly p. 39).

At least one member selected from the group consisting of iron nitrate, ammonium molybdate, indoleacetic acid, naphthylacetic acid, ethylenediaminetetraacetic acid, and N,N-dicarboxymethylglutamic acid is suitably usable as the nitrate reductase activator from the viewpoint of the effect of effectively lowering the content of nitrate in cultivation plants.

The use of a combination of a plurality of nitrate reductase activators is preferred from the viewpoint of the activity on plants at the time when the composition according to the present invention is dissolved in water to prepare a solution which is then applied to cultivation plants. In particular, the use of a combination of iron nitrate, ammonium molybdate, indoleacetic acid (or naphthylacetic acid), and ethylenediaminetetraacetic acid (or N,N-dicarboxymethylglutamic acid) is preferred.

The content of the nitrate reductase activator in the composition for reducing the nitrate content is in the range of 25 to 30% by mass, preferably in the range of 27 to 30% by mass, more preferably in the range of 27 to 28% by mass.

In using a combination of iron nitrate, ammonium molybdate, indoleacetic acid (or naphthylacetic acid), and ethylenediaminetetraacetic acid (or N,N-dicarboxymethylglutamic acid), the mass ratio of these compounds is not particularly limited. From the viewpoint of more effectively enhancing the activation of the nitrate reductase, the mass ratio of iron nitrate : ammonium molybdate : indoleacetic acid (or naphthylacetic acid) : ethylenediaminetetraacetic acid (or N,N-dicarboxymethylglutamic acid) is preferably 20 : 4 to 6 : 0.5 to 1.5 : 0.5 to 1.5, more preferably 20 : 5 : 1 : 1.

Further, the nitrate reductase activator referred herein also functions to activate nitrite reductase in plants.

(Chlorophyll synthesis promoter)

The chlorophyll synthesis promoter usable in the present invention is not particularly limited so far as it is usable in agricultural or plant cultivation applications. The mechanism of action thereof is not particularly limited so far as it leads to the development of action which promotes the synthesis of chlorophyll (regarding the detail of the chlorophyll synthesis promoter, if necessary; reference may be made to description in "Anzen Jizokugata Nogyo Wo Mezashite Kitosan No Nogyoriyo No Riron To Jissai (For Safe and Extended Agriculture - Theory and Practice of Chitosan for Use in Agriculture)" published by GIHODO SHUPPAN Co., Ltd. on November 6, 2000 (the 1st impression of the 1st edition), particularly p. 39).

From the viewpoint of the effect of effectively reducing the content of nitrate in cultivation plants, at least one member selected from the group consisting of 2-oxoglutaric acid and L-glutamic acid is suitable for use as the chlorophyll synthesis promoter.

The use of a combination of a plurality of chlorophyll synthesis promoters is preferred from the viewpoint of the activity on plants at the time when the composition according to the present invention is dissolved in water to prepare a solution which is then applied to cultivation plants. In particular, the use of a combination of 2-oxoglutaric acid and L-glutamic acid is preferred.

The content of the chlorophyll synthesis promoter in the composition for reducing the nitrate content is in the range of 29 to 35% by mass, preferably in the range of 31 to 34% by mass, more preferably in the range of 31 to 32% by mass.

In using a combination of 2-oxoglutaric acid and L-glutamic acid, the mass ratio of these compounds is not particularly limited. From the viewpoint of more effectively promoting chlorophyll synthesis, however, the mass ratio of 2-oxoglutaric acid : L-glutamic acid is preferably in the range of 30 : 0.5 to 1.5, more preferably 30 : 1.

(Organic acid)

The organic acid usable in the present invention is not particularly limited so far as it is usable in agricultural or plant cultivation applications. From the viewpoint of the effect of effectively reducing the content of nitrate in cultivation plants, at least one member selected from the group consisting of succinic acid, ascorbic acid and sorbic acid is suitably usable as the organic acid.
The use of a combination of a plurality of organic acids is preferred from the viewpoint of the activity on plants at the time when the composition according to the present invention is dissolved in water to prepare a solution which is then applied to cultivation plants. In particular, the use of a combination of succinic acid, ascorbic acid, and sorbic acid is preferred.
The content of the organic acid in the composition for reducing the nitrate content is in the range of 15 to 25% by mass, preferably in the range of 18 to 25% by mass, more preferably in the range of 20 to 25% by mass.
In using a combination of succinic acid, ascorbic acid, and sorbic acid, the mass ratio of these compounds is not particularly limited. From the viewpoint of optimal pH range at the time when these compounds are dissolved in water to prepare an aqueous solution, the mass ratio of succinic acid : ascorbic acid : sorbic acid is preferably in the range of 2 : 0.8 to 1.2 : 0.8 to 1.2, more preferably 2 : 1 : 1.

(Surfactant)

The composition of the present invention may optionally contain a surfactant from the viewpoint of enhancing the retention of the composition of the present invention on the surface of leaves of plants. The chlorophyll synthesis promoter usable in the present invention is not particularly limited so far as it is usable in agricultural and plant cultivation purposes. Regarding the detail of surfactants usable in agricultural and plant cultivation applications, if necessary, reference may be made to "Kumiai Noyaku Soran 2001 (Comprehensive Bibliography of Kumiai's Agricultural Chemicals 2001) (Revised edition)" edited by Noyaku Gijutu Fukyu Ka (Agricultural Chemical Technology Popuralization Section), Hiryo Noyaku Bu (Fertilizers and Pesticides Department), JA ZEN-NOH, published on January 31, 2001, particularly "Tenchakuzai (Spreader)", pp. 1592 - 1601.
The surfactant is preferably polyoxyethylene sorbitan monostearate from the viewpoint of the capability of holding the composition of the present invention on leaves of cultivation plants. A surfactant commercially available from Kao Corp. (tradename: Rheodol Super TW-S120) may also be used.
The content of the surfactant in the composition for reducing nitrate content is in the range of 1 to 3% by mass, preferably in the range of 1.5 to 2.5% by mass, more preferably in the range of 1 to 2% by mass.

(Use as aqueous solution)

According to the present invention, there is also provided a method for using the above composition as an aqueous solution. According to this method, in order to lower the content of nitrate in cultivation plants, for example, the composition for reducing the nitrate content is dissolved in water with pH 5 to 9 to prepare a solution which is adjusted to pH 4.5 to 5.5. Next, this aqueous solution is applied to seeds of an agricultural product. Alternatively, seeds may be immersed in the aqueous solution, or this aqueous solution may be applied to leaves of plants at the stage of growth.

(Comparison with existing technical level)

According to the results of analysis on existing technical level, only plant growth regulation and resistance-to-disease enhancement have hitherto been known as action of chitosan and organic acids. The action of molybdate anion and nitrate anion which enhances the activity of nitrate reductase has already been known. Practical use of molybdate anion and nitrate anion as nitrate content reduction means in vegetables and other cultivation plants has not hitherto been realized.
The present inventor has found that the composition according to the present invention enhances the efficiency of assimilation of inorganic nitrogen in plants and consequently lowers the content of nitrate in cultivation plants. This has been found for the first time by the present inventor and has not been drawn from growth promoting effect which has been reported in the past.

(Application)

The composition proposed by the present invention can be applied to any type of plants. In plants having a high nitrate content level (plants in their part as commercial product in which the content of nitrate nitrogen in total nitrogen is not less than 0.5%), the effect of the composition according to the present invention is particularly significant.

Plants of this type include, for example, a series of vegetables (spinach, various lettuces, cabbages, dill, parsley, radishes, and onions), and various root crops (beets, carrots, and potatoes).

(Action of composition)

The action of the composition according to the present invention is based on a yet unelucidated part in chitosan, a bioactive substance which is not substantially toxic and is environmentally friendly. This chitosan in combination with other components contained in the composition according to the present invention advantageously activates nitrate reductase and nitrite reductase, increases the content of chlorophyll in plants, and further realizes conversion to a substance capable of enhancing penetration activity. By virtue of this advantage, the assimilation of inorganic nitrogen is enhanced, and the content of nitrate in agricultural products can be lowered.

Chitosan can develop the above function only through a specific combination of chitosan with a very limited range of organic acids and only a part of compounds for which patent applications have been filed by the applicant of this invention. The reason for this is considered to reside in that the action of lowering of the nitrate content by the composition according to the present invention derives from the following three effects.

- Effect attained by activation of enzymes, which are important to assimilation of gene and inorganic nitrogen, that is, nitrate reductase, nitrite reductase, glutamate synthetase, and glutamic acid synthetase. This effect is realized by a mechanism in which chitosan, 2-oxoglutaric acid, succinic acid, indoleacetic acid, nitrate, molybdenum and the like are adsorbed onto the matrix of chitosan which is deposited persistently on leaves of plants to develop, as a cofactor, a precursor of a substrate, and the above enzyme activator, persistent action for a much longer period of time than the case where these substances are individually used. An improvement in activity of nitrate reductase leads to an increase in activity of nitrite reductase. This can enhance the effect of preventing the accumulation of nitrite in plant tissue particularly under such conditions that the amount of light is insufficient and other stress exists.
- Effect attained by promoting chlorophyll synthesis using 2-oxoglutaric acid and L-glutamic acid which are a precursor of the chlorophyll to increase the content of chlorophyll in leaves of plants and promoting the resultant photosynthesis and sugar formation. In this case, sugar leads to nitrogen assimilation in plants.
- Effect attained by penetration activity of chitosan and other components of the composition according to the present invention. This effect prevents the reduction of nitrate to a final product which is of nitrogen reduction type, resulting in entrainment of metabolism of carbohydrate and nitrogen.

Thus, dependency relation of function of "components and properties" which has hitherto been unknown could be confirmed. Therefore, it will be understood that the method according to the present invention is also effective in solving the above problems of the prior art.

The composition according to the present invention is soluble in water, has excellent film forming properties and deposition properties, and is highly tacky to vegetative substances. This composition is active and stable, for example, in the form of an aqueous solution having a pH value of 4.5 to 5.5 which is nearly neutral. The composition of the present invention in a concentration range used is not toxic to plants.

Chitosan, 2-oxoglutaric acid, L-glutamic acid, succinic acid, sorbic acid, ascorbic acid, and indoleacetic acid usable in the present invention are used as an active substance in the present invention and are available, for example, as naturally occurring known compounds, or provided by chemical synthesis, by a microbiological method, by enzymatic synthesis, and by extraction using a natural source.

When the composition of the present invention based on chitosan is used for reducing the content of non-assimilation nitrate, the amount and frequency used may vary depending upon environmental conditions. In general, a method may be adopted in which treatment of seeds with the composition according to the present invention and application of an aqueous solution to plants at the stage of growth are carried out. The application of the aqueous solution to plants at the stage of growth may be carried out, for example, once a week for three weeks until harvesting. If necessary, the number of times of application can be increased under such conditions that the amount of light is insufficient or other stress exists.

Treatment of vegetables at the stage of seeds may be carried out, for example, by dipping the seeds in a 0.5% aqueous solution of the composition of the present invention in a dry state. Preferably, the amount of the solution used in this case is, for example, about 1 liter per kg of seed. For application, for example, a 0.5% aqueous solution using dried powder can be used in an amount of 200 to 300 liters per ha.

Specific application examples will be presented only for demonstrating industrial applicability of the present invention and for deepening understanding of the contents of the present invention. However, it should be noted that these application examples do not cover all the characteristics of the present invention.

Examples

Application Example 1

This example demonstrates the action of a composition on an improvement in activity of nitrate reductase contained in leaves of lettuces grown in a greenhouse.
Components of composition (part 1) (wt%): chitosan having molecular weight 50 kDa - 20, nitrate reductase activator - 27, chlorophyll synthesis promoter - 31, organic acid - 20, and surfactant - 2.
Components of composition (part 2) (wt%): chitosan having molecular weight 170 kDa - 15, nitrate reductase activator - 25, chlorophyll synthesis promoter - 34, organic acid - 25, and surfactant - 1.
Data obtained in Application Example 1 are shown in Table 1. As shown in the data, nitrate reductase activity which is higher than the control sustained for 7 days after application to the lettuce.

Table 1 Effect of application of aqueous solution of composition according to the present invention to lettuce (variety: "Azart") at the stage of growth aiming at activation of nitrate reductase in leaves of the lettuce

| Type of composition | Activity of nitrate reductase contained in leaves of lettuce, $NO_2^-$/g-wet weight of tissue/hr | | | | |
|---|---|---|---|---|---|
| | Before treatment | After elapse of 1 day | After elapse of 3 days | After elapse of 7 days | After elapse of 10 days |
| Control, water | 64 ± 2 | 61 ± 2 | 65 ± 2 | 60 ± 2 | 63 ± 2 |
| Composition (part 1) | | 93 ± 3 | 79 ± 3 | 69 ± 1 | 65 ± 1 |
| Composition (part 2) | | 85 ± 2 | 80 ± 3 | 70 ± 2 | 67 ± 2 |

Application Example 2

This example demonstrates the action of the composition according to the present invention to improve the chlorophyll content of lettuce. The type and components of compositions are as shown in Application Example 1. Data of Example 2 (Table 2) show that the composition according to the present invention increases the content of chlorophyll for three days after treatment of the lettuce.

Table 2 Effect of application of aqueous solution of composition according to the present invention on content of chlorophyll in lettuce (variety: "Azart")

| Type of composition | Chlorophyll content of lettuce (mg/100 g-wet weight) | | | |
|---|---|---|---|---|
| | Before treatment treatment | After elapse of 1 day | After elapse of 2 days | After elapse of 3 days |
| Control, water | 98 ± 4 | 99 ± 4 | 97 ± 4 | 99 ± 3 |
| Composition (part 1) | | 143 ± 5 | 138 ± 5 | 115 ± 4 |
| Composition (part 2) | | 140 ± 6 | 120 ± 4 | 110 ± 5 |

Application Examples 3 to 5

These examples demonstrate the action of the compositions according to the present invention to lower the content of nitrate in leaves of various lettuces (varieties: "Azart", "Lolla Rossa", "Curly Leaf of Odessa") and spinach (variety: "Matador"). The components of the composition (part 1) are the same as those of Application Examples 1 and 2, and the components (wt%) of the composition (part 3) are as follows: chitosan having molecular weight 100 kDa - 18, nitrate reductase activator - 30, chlorophyll synthesis promoter - 31, organic acid - 18, and surfactant - 3.
Data of Application Examples 3 to 5 (Tables 3 to 5) demonstrate that the composition proposed by the present invention significantly lowers the content of nitrate contained in leaves of lettuces and spinach grown to a commercial level.

Table 3 Effect of two-stage treatment with composition according to the present invention on content of nitrate contained in lettuce "Azart" at the time of harvesting

| Type of composition* | Content of nitrate, mg-wet weight/kg | Additionally reduced nitrate, % |
|---|---|---|
| Control, water | 3200 ± 145 | - |
| Composition (part 1) | 1620 ± 74 | 49 |
| Composition (part 3) | 1700 ± 80 | 47 |
| * In application to lettuce (variety: "Azart"), water in the case of control and two-fold diluted solution of composition in the case of test system were used. | | |

Table 4 Effect of two-stage application of 0.5% aqueous solution of composition according to the present invention, in which the second application is carried out 10 days after the first-stage application, on content of nitrate in lettuce (variety: "Lolla Rossa") and spinach (variety: "Matador") at the time of elapse of two weeks after the two-stage application

| Type of application | Name of plant | Content of nitrate contained in leaves, mg-wet wieght of tissue/kg | Proportion of nitrate content to that of control*, % |
|---|---|---|---|
| Application of control-water | Lettuce | 4280 ± 114 | 100.0 |
| | Spinach | 3840 ± 97 | 100.0 |
| Application of 0.5% solution of composition (part 1) | Lettuce | 2115 ± 93 | 49.4 |
| | Spinach | 1967 ± 69 | 51.2 |
| * Product grown to commercial level | | | |

Table 5 Nitrate content in the case where the aqueous solution was applied to seeds of lettuce (variety: "Curly Leaf of Odessa"), and to the lettuce at the stage of growth

| Type of treatment | Nitrate content on 65th day (grown to commercial product level) after sowing, mg-wet weight of tissue/kg |
|---|---|
| Control - Treatment with water at seed stage (dipped in water). Three-stage application in which water was applied three times to plant at the stage of growth while leaving 10 days between applications. The first application was carried out on 35th day after sowing. | 5200 ± 134 |
| Treatment of seeds with composition* of the present invention (dipped in 0.5% aqueous solution for 24 hr). Three-stage application in which the composition was applied three times to plant at the stage of growth while leaving 10 days between applications. The first application was carried out on $35^{th}$ day after sowing. | 2300 ± 115 |
| *1 Part 1 | |

As described above, the composition according to the present invention in which a minor amount of bioactive substance has been added to chitosan can lower the content of nitrate in vegetables and root crops. Further, the composition according to the present invention improves the utilization ratio of nitrogenous fertilizers and consequently reduces environmental pollution (especially water pollution) with nitrate, which is highly toxic to fauna, and can realize harvesting of agricultural products having a low nitrate content which are not substantially harmful to environment.

(Method for measuring degree of deacetylation)

The following method according to the method specified in Japan Health Food & Nutrition Food Association

"Kenko Shokuhin Kikaku Kijun no Koji (bulletin of Health Foods Standard and Criterion)" (issued on June 1, 1995) is used. The amount of a free amino group is measured by colloidal titration using potassium polyvinyl sulfate (PVSK) to determine the degree of deacetylation of chitosan. According to a loss-on-drying test method, a 200-ml measuring flask is dried, and 1.0 g of a chitosan sample is then accurately weighed in the flask. A 0.5% aqueous acetic acid solution is added to dissolve the chitosan sample and to accurately bring the volume to 200 ml. 1.0 g of the chitosan sample solution is accurately weighed in a titration vessel. 50 ml of water and 0.2 ml of a toluidine blue (indicator) sample solution are.added to the vessel followed by thorough mixing. The mixture is then titrated with a potassium polyvinyl sulfate solution. The end point is a point at which blue has turned to purple-red. The titration value is V ml.

Likewise, a solution without the addition of the chitosan sample is titrated. The titration value is B ml. The potassium polyvinyl sulfate solution is accurately determined in about 1/400 N. The concentration is [PVSK].

Mass (X) of free amino group in chitosan (corresponding to mass of glucosamine residue) and mass (Y) of bound amino group (corresponding to mass of N-acetylglucosamine residue) are:

$$X = \text{mass of free amino group in chitosan} = [PVSK] \times 161/1000 \times (V - B); \text{ and}$$

and

$$Y = \text{mass of bound amino group in chitosan} = 0.5 \times 1/100 - X.$$

The degree of deacetylation is calculated by:

Degree of deacetylation (%) = (X/161)/(X/161 + Y/203) x 100. Incidentally, 161 is the equivalent molecular weight of glucosamine residue, and 203 is the equivalent molecular weight of N-acetylglucosamine residue.

(Method for measuring molecular weight of chitosan: Ostwald viscosity measurement method)

The specific viscosity is measured with Ostwald viscometer, and the molecular weight is determined based on the specific viscosity using a conversion table shown in Table 6 below. The viscosity measuring solution is prepared by adding 50 ml of a 4% aqueous acetic acid solution and 50 ml of 0.6 M brine to 50 mg of a chitosan sample to dissolve the chitosan sample. An Ostwald viscometer manufactured by SIBATA SCIENTIFIC TECHNOLOGY LTD. with a capillary having an inner diameter of 0.5 mm is provided, and the time necessary for the solution to pass from a dark line a to a dark line b is measured. This time is t.

The same solution as the sample solution except that chitosan is not dissolved is prepared, and, in the same manner as described above, the time necessary for the solution to pass from a dark line a to a dark line b is measured. This time is to.

Each of t and $t_0$ is measured three times, and the average value is determined.

The specific viscosity is calculated by the following equation.

$$\text{Specific viscosity} = t/t_0 - 1$$

Table 6 Table 6: Table for conversion of specific viscosity to molecular weight of chitosan

| Specific viscosity | Molecular weight (Da) |
|---|---|
| 0.005 | 1,000 |
| 0.01 | 4,000 |
| 0.02 | 8,000 |
| 0.03 | 13,000 |
| 0.04 | 17,000 |

Table continued

| Specific viscosity | Molecular weight (Da) |
|---|---|
| 0.05 | 21,000 |
| 0.06 | 26,000 |
| 0.07 | 30,000 |
| 0.08 | 34,000 |
| 0.09 | 39,000 |
| 0.10 | 43,000 |
| 0.11 | 47,000 |
| 0.12 | 51,000 |
| 0.13 | 55,000 |
| 0.14 | 59,000 |
| 0.15 | 63,000 |
| 0.16 | 67,000 |
| 0.17 | 71,000 |
| 0.18 | 75,000 |
| 0.19 | 79,000 |
| 0.20 | 83,000 |
| 0.39 | 150,000 |

When the specific viscosity is between two of the above numerals, the molecular weight is determined on the premise that proportionality relation is established.

(Method for measuring molecular weight of chitosan: GPC measurement method)

The molecular weight of chitosan can also be determined by gel permeation chromatography (GPC).
Regarding analytical instrument used in GPC measurement, a differential refractive index detector (Shodex RI-71), a pump (Shodex DS-4), a data processor GPC software (Waters Maxima 820J), and two separation columns (Shodex OHpak SB-806M HQ) connected to each other in series are set in a column oven (Shodex OVEN AO-50) kept at a temperature of 60°C.
A 0.1 M acetic acid buffer (this buffer is prepared by adding 100 ml of 0.1 M sodium acetate to 750 ml of 0.1 M acetic acid, adjusting the mixture to pH 4 by the addition of 0.1 M sodium acetate to prepare a solution, and filtering the solution through a filter with a pore diameter of 0.45 μm) is provided as an eluent, and the eluent is passed through the columns at a flow rate of 1.0 ml/min.
The sample is previously dissolved in the eluent to a concentration of 0.1% by mass until 48 hr before the GPC measurement. In this dissolution, care should be taken so as not to vigorously shake the solution, and ultrasonic waves should not be used. 200 μl of the sample solution prepared above is poured into the column.
Chitosan having a known molecular weight as determined by the above "viscosity measurement method" is used as a standard sample.

Eluent: 0.1 M acetic acid buffer (pH 4.0)
Column: Shodex SB-806M HQ x 2, 60°C
Flow rate: 1.0 ml/min
Detector: Differential refractive index detector (Shodex RI-71)
Amount of pouring: 200 μl (0.1%/eluent)
A GPC chromatogram as measured under the above conditions is shown in Fig. 1.

Industrial Applicability

As described above, according to the present invention, there is provided a composition for reducing the content of nitrate in a cultivation plant, wherein chitosan, an organic acid, a nitrate reductase activator, and a chlorophyll synthesis promoter are contained in a predetermined mass ratio. According to the present invention, the amount of nitrate contained in the cultivation plant can be reduced without necessarily using a transgenic plant and an expensive compound.

## Claims

1. A composition for reducing the nitrate content in a cultivation plant, comprising: chitosan, an organic acid, a nitrate reductase activator, and a chlorophyll synthesis promoter in the following mass ratio (%):

| | |
|---|---|
| chitosan | 15 to 25 |
| nitrate reductase activator | 25 to 30 |
| chlorophyll synthesis promoter | 29 to 35 |
| organic acid | 15 to 25. |

2. A composition for reducing the nitrate content according to claim 1, wherein the mass-average molecular weight of chitosan is in the range of 20 to 180 kDa.

3. A composition for reducing the nitrate content according to claim 1 or 2, wherein the degree of deacetylation of chitosan is not less than 70%.

4. A composition for reducing the nitrate content according to any of claims 1-3, wherein the organic acid is at least one member selected from the group consisting of: succinic acid, ascorbic acid and sorbic acid.

5. A composition for reducing the nitrate content according to any of claims 1-4, wherein the organic acid is a combination of succinic acid, ascorbic acid and sorbic acid.

6. A composition for reducing the nitrate content according to claim 5, wherein the organic acid is a combination of succinic acid, ascorbic acid and sorbic acid and the mass ratio of the succinic acid, the ascorbic acid and the sorbic acid to the whole organic acid contained in the composition is 2 for the succinic acid, 0.8 to 1.2 for the ascorbic acid, and 0.8 to 1.2 for the sorbic acid.

7. A composition for reducing the nitrate content according to any of claims 1-6, wherein the nitrate reductase activator is at least one member selected from the group consisting of: iron nitrate, ammonium molybdate, indoleacetic acid, naphthylacetic acid, ethylenediaminetetraacetic acid, and N,N-dicarboxymethylglutamic acid.

8. A composition for reducing the nitrate content according to any of claims 1-7, wherein the nitrate reductase activator is a combination of iron nitrate, ammonium molybdate, indoleacetic acid, and ethylenediaminetetraacetic acid.

9. A composition for reducing the nitrate content according to claim 8, wherein the nitrate reductase activator is a combination of iron nitrate, ammonium molybdate, indoleacetic acid, and ethylenediaminetetraacetic acid and the mass ratio of the iron nitrate, the ammonium molybdate, the indoleacetic acid, and the ethylenediaminetetraacetic acid to the whole nitrate reductase activator contained in the composition is 20 for the iron nitrate, 4 to 6 for the ammonium molybdate, 0.5 to 1.5 for the indoleacetic acid, and 0.5 to 1.5 for the ethylenediaminetetraacetic acid.

10. A composition for reducing the nitrate content according to any of claims 1-7, wherein the nitrate reductase activator is a combination of iron nitrate, ammonium molybdate, naphthylacetic acid, and N,N-dicarboxymethylglutaminic acid.

11. A composition for reducing the nitrate content according to claim 10, wherein the nitrate reductase activator is a combination of iron nitrate, ammonium molybdate, naphthylacetic acid, and N,N-dicarboxymethylglutaminic acid and the mass ratio of the iron nitrate, the ammonium molybdate, the naphthylacetic acid, and the N,N-dicarboxymethylglutaminic acid to the whole nitrate reductase activator contained in the composition is 20 for the iron nitrate, 4 to 6 for the ammonium molybdate, 0.5 to 1.5 for the naphthylacetic acid, and 0.5 to 1.5 for the N,N-dicarboxymethylglutaminic acid.

**12.** A composition for reducing the nitrate content according to any of claims 1-11, wherein the chlorophyll synthesis promoter is at least one member selected from the group consisting of: 2-oxoglutaric acid and L-glutamic acid.

**13.** A composition for reducing the nitrate content according to any of claims 1-12, wherein the chlorophyll synthesis promoter is a combination of 2-oxoglutaric acid and L-glutamic acid.

**14.** A composition for reducing the nitrate content according to claim 13, wherein the chlorophyll synthesis promoter is a combination of 2-oxoglutaric acid and L-glutamic acid and the mass ratio of the 2-oxoglutaric acid and the L-glutamic acid to the whole chlorophyll synthesis promoter contained in the composition is 30 for the 2-oxoglutaric acid and 0.5 to 1.5 for L-glutamic acid.

**15.** A composition for reducing the nitrate content according to any of claims 1-14, **characterized by** further comprising 1 to 3 parts by mass, based on 100 parts by mass of the composition for reducing the nitrate content, of a surfactant.

**16.** A composition for reducing the nitrate content according to claim 15, wherein the surfactant is polyoxyethylene sorbitan monostearate.

**17.** An aqueous solution of a composition for reducing the nitrate content, comprising: water, and a composition for reducing the nitrate content dissolved therein according to any one of claims 1-16.

**18.** An aqueous solution of a composition for reducing the nitrate content according to claim 17, which has a pH value in the range of 4.5 to 5.5.

**19.** A method for reducing the nitrate content in a cultivation plant, the method comprising applying the composition for reducing the nitrate content according to any one of claims 1-16 onto seeds of the cultivation plant.

**20.** A method for reducing the nitrate content in a cultivation plant, comprising: applying an aqueous solution of a composition for reducing the nitrate content according to claim 17 or 18 onto seed of the cultivation plant.

**21.** A method for reducing the nitrate content in a cultivation plant, the method comprising applying the composition for reducing the nitrate content according to any one of claims 1-16 onto leaves of the cultivation plant.

**22.** A method for reducing the nitrate content in a cultivation plant, the method comprising applying the aqueous solution of the composition for reducing the nitrate content according to claim 17 or 18 onto leaves of the cultivation plant.

**23.** A method for reducing the nitrate content in a cultivation plant according to any of claims 19-22, wherein the cultivation plant is at least one member selected from the group consisting of: spinach, lettuces, cabbages, dill, parsley, radishes, onions, beets, carrots, and potatoes.

Fig.1

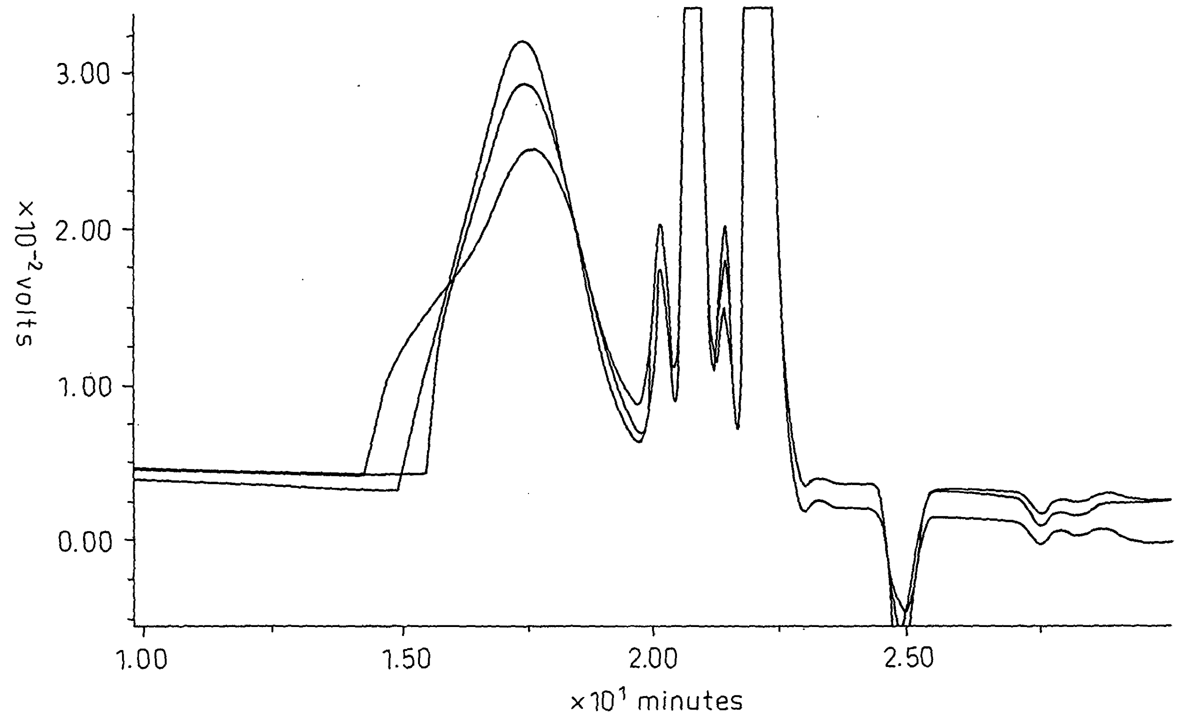

**INTERNATIONAL SEARCH REPORT**

International application No.
PCT/JP2004/014290

A. CLASSIFICATION OF SUBJECT MATTER
Int.Cl[7] A01N63/00

According to International Patent Classification (IPC) or to both national classification and IPC

B. FIELDS SEARCHED

Minimum documentation searched (classification system followed by classification symbols)
Int.Cl[7] A01N63/00

Documentation searched other than minimum documentation to the extent that such documents are included in the fields searched

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-340025 A (Isao YOSHIDA, Masao SHIBUYA, Michio ITO),<br>11 December, 2001 (11.12.01),<br>Full text<br>(Family: none) | 1-3,7,15-23<br>1-23 |
| Y | JP 2001-316204 A (Kao Corp.),<br>13 November, 2001 (13.11.01),<br>Full text<br>& EP 1151668 A2 & US 2002/0006872 A | 1-23 |
| Y | Doklady Akademii Nauk Ukrainskoi SSR, Seriya B: Geologicheskie, Khimicheskie i Biologicheskie Nauki, 1990, No.2, pages 74 to 76 | 1-23 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>18 October, 2004 (18.10.04) | Date of mailing of the international search report<br>09 November, 2004 (09.11.04) |
| Name and mailing address of the ISA/<br>Japanese Patent Office<br>Facsimile No. | Authorized officer<br><br>Telephone No. |

Form PCT/ISA/210 (second sheet) (January 2004)